# EUROPEAN PATENT SPECIFICATION

(11) **EP 2 805 606 B1**
(45) Date of publication and mention of the grant of the patent: **14.02.2018**
(21) Application number: 12865671.7
(22) Date of filing: 13.12.2012
(51) Int. Cl.: A01J 5/007, A01J 5/00

(54) **METHOD FOR AUTOMATICALLY EXAMINING MILKING MACHINE**
VERFAHREN ZUR AUTOMATISCHEN ÜBERPRÜFUNG VON MELKMASCHINEN
PROCÉDÉ DE CONTRÔLE AUTOMATIQUE DE TRAYEUSE

(30) Priority: 19.01.2012 KR 20120006171
(43) Date of publication of application: 26.11.2014
(73) Proprietor: Song, Yongbok, Gyeonggi-do 456-811 (KR); Cho, Yongseok, Gyeonggi-do 464-841 (KR)
(72) Inventor: Song, Yongbok, Gyeonggi-do 456-811 (KR); Cho, Yongseok, Gyeonggi-do 464-841 (KR)
(74) Representative: dompatent von Kreisler Selting Werner - Partnerschaft von Patent- und Rechtsanwälten mbB
(86) International application number: PCT/KR2012/010838
(87) International publication number: WO 2013/108993

(56) References cited:
- JP-A- H0 670 655
- JP-A- 2008 092 889
- JP-B2- 3 575 614
- KR-A- 20040 106 078
- KR-Y1- 200 394 678
- US-A- 5 881 669
- US-B1- 6 755 152
- US-B2- 6 553 934

## Description

### [Technical Field]

The present invention relates to a method for automatically examining a milking machine, and more particularly, to a method for automatically examining a milking machine, which may check an abnormality or damage to the milking machine in real time during a milking operation.

### [Background Art]

Generally, it is the very ideal to make manually the milk of the milk cows with the hand. However, it requires skillful techniques and much effort to make the milk manually, and thus, recently, most dairy farmers have been performing milking operations using a milking machine.

In general, a conventional milking machine which is installed at nipple of the dairy cow is a suction type which comprises a plurality of teat cups to which a vacuum is alternately applied, a milk claw to which the plurality of teat cups are concentrated, a milk hose connected to the milk claw, a vacuum hose connected to the teat cups, and a pulsator connected to the vacuum hose.

However, the conventional milking machine does not have the means for checking an abnormality or damage to the milking machine, and thus the milking machine is frequently abnormally operated and applies an irregular vacuum pressure (e.g., a vacuum pressure which is excessively higher or lower than a predetermined vacuum pressure) to the nipple of the dairy cows. For example, when the irregular vacuum pressure is applied to the nipple of the dairy cows due to a malfunction of the pulsator, an abnormality may occur at subcutaneous tissues of the nipple and thus mammitis may be generated. Further, when the abnormality occurs at the treats due to mammitis or the like, the number of somatic cells contained in raw milk is increased, and thus the quality of the raw milk is degraded.
Further, most of the abnormality of the milking machine is caused by a very minute reason, and in the majority of cases, to exactly find out the reason, it is required to monitor whether each component is normally operated during the milking operation. After completion of the milking operation, it is difficult to find out the reason for the abnormality.

In particular, when the milking machine is originally a normal product, but a construction component (e.g., a liner) of a milk unit is damaged by a motion of the dairy cow during the milking operation, an apparatus which may immediately check the abnormality or damage to the milking machine is required. A method of automatically examining a milking machine is known from e.g. US6,553,934 B2.

### [Disclosure]

### [Technical Problem]

The present invention is directed to providing a method of automatically examining a milking machine, which may immediately check an abnormality or damage to the milking machine in real time during a milking operation.

### [Technical Solution]

An apparatus for automatically examining a milking comprises a first vacuum sensor configured to measure a vacuum pressure transferred through a first vacuum hose; a second vacuum sensor configured to measure a vacuum pressure transferred through a second vacuum hose; a memory part in which a milking machine state analysis program configured to analyze data of a waveform of the vacuum pressure measured by each of the first and second vacuum sensors and determine an abnormality of a pulsator or an abnormality of a milk unit is stored; a display part configured to display result data analyzed by the milking machine state analysis program; and a control part configured to control interactions and signal flows among the first vacuum sensor, the second vacuum sensor, the memory part, and the display part.

The milking machine state analysis program may comprises steps of (a) measuring a current air pressure; (b) performing a zero pressure calibration of the first vacuum sensor and the second vacuum sensor according to a difference between the measured current air pressure and a previously stored air pressure; (c) storing sampling data measured for a predetermined period of time by the first and second vacuum sensors; (d) analyzing the sampling data stored in the step (c) and calculating a maximum vacuum pressure value and a minimum vacuum pressure value of the sampling data; (e) subtracting a value of 0.1 to 4 kPa from the maximum vacuum pressure value of the sampling data and designating the subtracted value as a high trigger for detecting an operation abnormality; (f) subtracting a value of 4 to 50 kPa from the maximum vacuum pressure value of the sampling data and designating a subtracted value as a high trigger for detecting trouble; (g) adding a value of 0.1 to 4 kPa to an air pressure value in which the zero pressure calibration is performed in the step (b) and designating an added value as a low trigger for detecting the operation abnormality; and (h) adding a value of 4 to 50 kPa to the minimum vacuum pressure value of the sampling data and designating an added value as a low trigger for detecting the trouble.

After the step (h), the milking machine state analysis program may further comprises steps of (i) reading data of the waveform of the vacuum pressure measured in real time by each of the first and second vacuum sensors; (j) determining whether a value of a maximally maintained section (B) of the waveform in the read data is less than the high trigger for detecting the operation abnormality; (k) generating an error code requiring a check of the pulsator when a result determined in the step (j) is that the value of the maximally maintained section (B) of the waveform in the read data is less than the high trigger for detecting the operation abnormality; (l) determining whether a value of a minimally maintained section (D) of the waveform in the read data is more than the low trigger for detecting the operation abnormality; and (m) generating an error code requiring the check of the pulsator when a result determined in the step (l) is that the value of the minimally maintained section (D) of the waveform in the read data is more than the low trigger for detecting the operation abnormality.

After the step (h), the milking machine state analysis program may further comprises steps of (i) reading data of the waveform of the vacuum pressure measured in real time by each of the first and second vacuum sensors; (j) determining whether a value of a maximally maintained section (B) of the waveform in the read data is less than the high trigger for detecting the trouble; (k) generating an error code indicating the trouble of the pulsator when a result determined in the step (j) is that the value of the maximally maintained section (B) of the waveform in the read data is less than the high trigger for detecting the trouble; (l) determining whether a value of a minimally maintained section (D) of the waveform in the read data is more than the low trigger for detecting the trouble; and (m) generating an error code indicating the trouble of the pulsator when a result determined in the step (l) is that the value of the minimally maintained section (D) of the waveform in the read data is more than the low trigger for detecting the trouble.

After the step (h), the milking machine state analysis program may further comprises steps of (i) reading data of the waveform of the vacuum pressure measured in real time by each of the first and second vacuum sensors; (j) determining whether a period of a rising section (A) of the waveform in the read data is more than a predetermined multiple of a period in which the rising section (A) and a maximally maintained section (B) are added; and (k) generating an error code requiring a replacement of a liner when a result determined in the step (j) is that the period of the rising section (A) of the waveform in the read data is more than the predetermined multiple of the period in which the rising section (A) and the maximally maintained section (B) are added.

After the step (h), the milking machine state analysis program may further comprises steps of (i) reading data of the waveform of the vacuum pressure measured in real time by each of the first and second vacuum sensors; (j) determining whether a period of a falling section (C) of the waveform in the read data is more than a predetermined multiple of a period in which the falling section (C) and a minimally maintained section (D) are added; and (k) generating an error code requiring a replacement of a liner when a result determined in the step (j) is that the period of the falling section (C) of the waveform in the read data is more than the predetermined multiple of the period in which the falling section (C) and the minimally maintained section (D) are added.

After the step (h), the milking machine state analysis program may further comprises steps of (i) reading data of the waveform of the vacuum pressure measured in real time by each of the first and second vacuum sensors; (j) determining whether a period in which a rising section (A) and a maximally maintained section (B) of the waveform in the read data are added is more than a predetermined multiple of a period in which a falling section (C) and a minimally maintained section (D) are added; and (k) generating an error code requiring a check of the pulsator when a result determined in the step (j) is that the period in which the rising section (A) and the maximally maintained section (B) of the waveform in the read data are added is more than the predetermined multiple of the period in which the falling section (C) and the minimally maintained section (D) are added.

After the step (h), the milking machine state analysis program may further comprises steps of (i) reading data of the waveform of the vacuum pressure measured in real time by each of the first and second vacuum sensors; (j) determining whether a period in which a falling section (C) and a minimally maintained section (D) of the waveform in the read data are added is more than a predetermined multiple of a period in which a rising section (A) and a maximally maintained section (B) are added; and (k) generating an error code requiring a check of the pulsator when a result determined in the step (j) is that the period in which the falling section (C) and the minimally maintained section (D) of the waveform in the read data are added is more than the predetermined multiple of the period in which the rising section (A) and the maximally maintained section (B) are added.

The predetermined multiple in the step (j) and the step (k) is a value which is predetermined from a range of 0.5 to 1.0 by a user.

The milking machine state analysis program may comprises steps of (a) setting a reference period range of each of the first and second vacuum sensors; (b) reading data of the waveform of the vacuum pressure measured by the first and second vacuum sensors; (c) determining whether a period of the waveform in the read data is out of the reference period range; and (d) generating an error code requiring a check of the pulsator, when a result determined in the step (c) is that period of the waveform in the read data is out of the reference period range.

The reference period range in the step (c) and the step (d) may be a value which is predetermined from a range of 2/3 T (a pulsation cycle of 90 times per minute) to 3 T (a pulsation cycle of 20 times per minute) by a user.

The milking machine state analysis program may comprises steps of (a) reading data of the waveform of the vacuum pressure measured in real time by each of the first and second vacuum sensors; (b) calculating an average value of a maximally maintained section (B) measured by the first vacuum sensor; (c) calculating an average value of the maximally maintained section (B) measured by the second vacuum sensor; (d) determining whether a difference between the average value calculated in the step (b) and the average value calculated in the step (c) is more than a predetermined value; and (e) generating an error code indicating an abnormality of a liner or a vacuum short hose, when a result determined in the step (d) is that the difference between the average value calculated in the step (b) and the average value calculated in the step (c) is more than the predetermined value.

The predetermined value in the step (d) and the step (e) may be a value which is predetermined from a range of 0.1 to 10 kPa by a user.

The milking machine state analysis program may comprises steps of (a) reading data of the waveform of the vacuum pressure measured in real time by each of the first and second vacuum sensors; (b) calculating an average value of a maximally maintained section (B) measured by the first vacuum sensor; (c) calculating an average value of the maximally maintained section (B) measured by the second vacuum sensor; (d) calculating an average value of the average value calculated in the step (b) and the average value calculated in the step (c); (e) determining whether the average value calculated in the step (d) is more than a predetermined upper limit value of the vacuum pressure; and (f) generating an error code requiring a check of the pulsator, when a result determined in the step (e) is that the average value calculated in the step (d) is more than the predetermined upper limit value of the vacuum pressure.

The predetermined value in the step (e) and the step (f) may be a value which is predetermined from a range of 30 to 100 kPa by a user.

The milking machine state analysis program may comprises (a) reading data of the waveform of the vacuum pressure measured in real time by each of the first and second vacuum sensors; (b) calculating an average value of a maximally maintained section (B) measured by the first vacuum sensor; (c) calculating an average value of the maximally maintained section (B) measured by the second vacuum sensor; (d) calculating an average value of the average value calculated in the step (b) and the average value calculated in the step (c); (e) determining whether the average value calculated in the step (d) is less than a predetermined lower limit value of vacuum pressure; and (f) generating an error code requiring a check of the pulsator, when a result determined in the step (e) is that the average value calculated in the step (d) is less than the predetermined lower limit value of vacuum pressure.

The predetermined value in the step (e) and the step (f) may be a value which is predetermined from a range of 0 to 50k Pa by a user.

The apparatus for automatically examining a milking machine may further comprises a communication part configured to provide a communication interface between the apparatus for automatically examining the milking machine and an external device.

The apparatus for automatically examining a milking machine may further comprises a key input part including one or more instruction buttons for the apparatus for automatically examining the milking machine. The present invention provides a method of automatically examining a milking machine using an apparatus for automatically examining the milking machine, which comprises a first vacuum sensor configured to measure a vacuum pressure transferred through a first vacuum hose, a second vacuum sensor configured to measure a vacuum pressure transferred through a second vacuum hose, and a control part configured to control the first and second vacuum sensors, wherein the control part comprises an operation (a) of measuring a current air pressure; an operation (b) of performing a zero pressure calibration of the first vacuum sensor and the second vacuum sensor according to a difference between the measured current air pressure and a previously stored air pressure; an operation (c) of storing sampling data measured for a predetermined period of time by the first and second vacuum sensors; an operation (d) of analyzing the sampling data stored in the operation (c) and calculating a maximum vacuum pressure value and a minimum vacuum pressure value of the sampling data; an operation of (e) subtracting a value of 0.1 to 4 kPa from the maximum vacuum pressure value of the sampling data and designating a subtracted value as a high trigger for detecting an operation abnormality; an operation (f) of subtracting a value of 4 to 50 kPa from the maximum vacuum pressure value of the sampling data and designating a subtracted value as a high trigger for detecting a trouble; an operation (g) of adding a value of 0.1 to 4 kPa to an air pressure value in which the zero pressure calibration is performed in the operation (b) and designating an added value as a low trigger for detecting the operation abnormality; and an operation (h) of adding a value of 4 to 50 kPa to the minimum vacuum pressure value of the sampling data and designating an added value as a low trigger for detecting the trouble.

After the operation (h), the control part may further comprises an operation (i) of reading data of the waveform of the vacuum pressure measured in real time by each of the first and second vacuum sensors; an operation (j) of determining whether a value of a maximally maintained section (B) of the waveform in the read data is less than the high trigger for detecting the operation abnormality; an operation (k) of generating an error code requiring a check of the pulsator when a result determined in the operation (j) is that the value of the maximally maintained section (B) of the waveform in the read data is less than the high trigger for detecting the operation abnormality; an operation (l) of determining whether a value of a minimally maintained section (D) of the waveform in the read data is more than the low trigger for detecting the operation abnormality; and an operation (m) of generating an error code requiring the check of the pulsator 20 when a result determined in the operation (l) is that the value of the minimally maintained section (D) of the waveform in the read data is more than the low trigger for detecting the operation abnormality.

After the operation (h), the control part may further comprises an operation (i) of reading data of the waveform of the vacuum pressure measured in real time by each of the first and second vacuum sensors; an operation (j) of determining whether a value of a maximally maintained section (B) of the waveform in the read data is less than the high trigger for detecting the trouble; an operation (k) of generating an error code indicating the trouble of the pulsator when a result determined in the operation (j) is that the value of the maximally maintained section (B) of the waveform in the read data is less than the high trigger for detecting the trouble; an operation (l) of determining whether a value of a minimally maintained section (D) of the waveform in the read data is more than the low trigger for detecting the trouble; and an operation (m) of generating an error code indicating the trouble of the pulsator when a result determined in the operation (l) is that the value of the minimally maintained section (D) of the waveform in the read data is more than the low trigger for detecting the trouble.

After the operation (h), the control part may further comprises an operation (i) of reading data of the waveform of the vacuum pressure measured in real time by each of the first and second vacuum sensors; an operation (j) of determining whether a period of a rising section (A) of the waveform in the read data is more than a predetermined multiple of a period in which the rising section (A) and a maximally maintained section (B) are added; and an operation (k) of generating an error code requiring a replacement of a liner when a result determined in the operation (j) is that the period of the rising section (A) of the waveform in the read data is more than the predetermined multiple of the period in which the rising section (A) and the maximally maintained section (B) are added.

After the operation (h), the control part may further comprises an operation (i) of reading data of the waveform of the vacuum pressure measured in real time by each of the first and second vacuum sensors; an operation (j) of determining whether a period of a falling section (C) of the waveform in the read data is more than a predetermined multiple of a period in which the falling section (C) and a minimally maintained section (D) are added; and (k) generating an error code requiring a replacement of a liner when a result determined in the operation (j) is that the period of the falling section (C) of the waveform in the read data is more than the predetermined multiple of the period in which the falling section (C) and the minimally maintained section (D) are added.

After the operation (h), the control part may further comprises an operation (i) of reading data of the waveform of the vacuum pressure measured in real time by each of the first and second vacuum sensors; an operation (j) of determining whether a period in which a rising section (A) and a maximally maintained section (B) of the waveform in the read data are added is more than a predetermined multiple of a period in which a falling section (C) and a minimally maintained section (D) are added; and (k) generating an error code requiring a check of the pulsator when a result determined in the operation (j) is that the period in which the rising section (A) and the maximally maintained section (B) of the waveform in the read data are added is more than the predetermined multiple of the period in which the falling section (C) and the minimally maintained section (D) are added.

After the operation (h), the control part may further comprises an operation (i) of reading data of the waveform of the vacuum pressure measured in real time by each of the first and second vacuum sensors; an operation (j) of determining whether a period in which a falling section (C) and a minimally maintained section (D) of the waveform in the read data are added is more than a predetermined multiple of a period in which a rising section (A) and a maximally maintained section (B) are added; and (k) generating an error code requiring a check of the pulsator when a result determined in the operation (j) is that the period in which the falling section (C) and the minimally maintained section (D) of the waveform in the read data are added is more than the predetermined multiple of the period in which the rising section (A) and the maximally maintained section (B) are added.

The predetermined multiple in the operation (j) and the operation (k) may be a value which is predetermined from a range of 0.5 to 1.0 by a user. Another method provides for automatically examining a milking machine using an apparatus for automatically examining the milking machine, which comprises a first vacuum sensor configured to measure a vacuum pressure transferred through a first vacuum hose, a second vacuum sensor configured to measure a vacuum pressure transferred through a second vacuum hose, and a control part configured to control the first and second vacuum sensors, wherein the control part comprises an operation (a) of setting a reference period range of each of the first and second vacuum sensors; an operation (b) of reading data of the waveform of the vacuum pressure measured by the first and second vacuum sensors; an operation (c) of determining whether a period of the waveform in the read data is out of the reference period range; and an operation (d) of generating an error code requiring a check of the pulsator, when a result determined in the operation (c) is that period of the waveform in the read data is out of the reference period range.

The reference period range in the operation (c) and the operation (d) may be a value which is predetermined from a range of 2/3 T (a pulsation cycle of 90 times per minute) to 3 T (a pulsation cycle of 20 times per minute) by a user.

Yet another method provides for automatically examining a milking machine using an apparatus for automatically examining the milking machine, which comprises a first vacuum sensor configured to measure a vacuum pressure transferred through a first vacuum hose, a second vacuum sensor configured to measure a vacuum pressure transferred through a second vacuum hose, and a control part configured to control the first and second vacuum sensors, wherein the control part comprises an operation (a) of reading data of the waveform of the vacuum pressure measured in real time by each of the first and second vacuum sensors; an operation (b) of calculating an average value of a maximally maintained section (B) measured by the first vacuum sensor; an operation (c) of calculating an average value of the maximally maintained section (B) measured by the second vacuum sensor; an operation (d) of determining whether a difference between the average value calculated in the operation (b) and the average value calculated in the operation (c) is more than a predetermined value; and (e) generating an error code indicating an abnormality of a liner or a vacuum short hose, when a result determined in the operation (d) is that the difference between the average value calculated in the operation (b) and the average value calculated in the operation (c) is more than the predetermined value.

The predetermined value in the operation (d) and the operation (e) may be a value which is predetermined from a range of 0.1 to 10 kPa by a user.

Yet still another method provides for automatically examining a milking machine using an apparatus for automatically examining the milking machine, which comprises a first vacuum sensor configured to measure a vacuum pressure transferred through a first vacuum hose, a second vacuum sensor configured to measure a vacuum pressure transferred through a second vacuum hose, and a control part configured to control the first and second vacuum sensors, wherein the control part comprises an operation (a) of reading data of the waveform of the vacuum pressure measured in real time by each of the first and second vacuum sensors; an operation (b) of calculating an average value of a maximally maintained section (B) measured by the first vacuum sensor; an operation (c) of calculating an average value of the maximally maintained section (B) measured by the second vacuum sensor; an operation (d) of calculating an average value of the average value calculated in the operation (b) and the average value calculated in the operation (c); an operation (e) of determining whether the average value calculated in the operation (d) is more than a predetermined upper limit value of the vacuum pressure; and an operation (f) of generating an error code requiring a check of the pulsator, when a result determined in the operation (e) is that the average value calculated in the operation (d) is more than the predetermined upper limit value of the vacuum pressure.

The predetermined value in the operation (e) and the operation (f) may be a value which is predetermined from a range of 30 to 100 kPa by a user.

Yet still another method provides for automatically examining a milking machine using an apparatus for automatically examining the milking machine, which comprises a first vacuum sensor configured to measure a vacuum pressure transferred through a first vacuum hose, a second vacuum sensor configured to measure a vacuum pressure transferred through a second vacuum hose, and a control part configured to control the first and second vacuum sensors, wherein the control part comprises an operation (a) of reading data of the waveform of the vacuum pressure measured in real time by each of the first and second vacuum sensors; an operation (b) of calculating an average value of a maximally maintained section (B) measured by the first vacuum sensor; an operation (c) of calculating an average value of the maximally maintained section (B) measured by the second vacuum sensor; an operation (d) of calculating an average value of the average value calculated in the operation (b) and the average value calculated in the operation (c); an operation (e) of determining whether the average value calculated in the operation (d) is less than a predetermined lower limit value of the vacuum pressure; and an operation (f) of generating an error code requiring a check of the pulsator, when a result determined in the operation (e) is that the average value calculated in the operation (d) is less than the predetermined lower limit value of the vacuum pressure.

The predetermined value in the operation (e) and the operation (f) may be a value which is predetermined from a range of 0 to 50 kPa by a user.

### [Advantageous Effects]

The apparatus for automatically examining a milking machine can have directly advantageous effects, as follows:
(a) it is possible to check the abnormality or damage to the construction components of the milking machine, such as the pulsator and the liner, in real time;
(b) since the abnormality or damage to the construction components of the milking machine, such as the pulsator and the liner, is automatically detected, a user's convenience is enhanced;
(c) since the abnormality or damage to the construction components of the milking machine, such as the pulsator and the liner, is informed through, for example, a message board and/or an alarm, a user's recognizability is enhanced; and
(d) since the information of the abnormality or damage to the construction components of the milking machine, such as the pulsator and the liner, is transmitted to a machine manager through a text message, a central monitoring device or the like, it is possible to provide more active service.

Further, the apparatus for automatically examining a milking machine can have indirectly advantageous effects, as follows:
(a) since the abnormality or damage to the construction components of the milking machine, such as the pulsator and the liner, is informed, it is possible to reduce an artificial cull of the dairy cows due to mammitis, and thus help the dairy cow to extend its lifespan;
(b) since the medicine and effort for treating mammitis of the dairy cow can be reduced, it is possible to increase a user's profits and also save the force of labor; and
(c) since the number of administrations of antibiotics can be reduced, it is possible to produce raw milk of high quality.

### [Description of Drawings]

FIG. 1 is a schematic view of an automatic milking machine check system in which an apparatus for automatically examining a milking machine is applied.
FIG. 2 is a block diagram explaining the configuration of the apparatus for automatically examining the milking machine.
FIG. 3a is a perspective view schematically illustrating an exterior of the apparatus for automatically examining the milking machine of FIG. 2.
FIG. 3b is a plane view schematically illustrating the exterior of the apparatus for automatically examining the milking machine of FIG. 2.
FIG. 3c is a front view schematically illustrating the exterior of the apparatus for automatically examining the milking machine of FIG. 2.
FIG. 3d is a left side view schematically illustrating the exterior of the apparatus for automatically examining the milking machine of FIG. 2.
FIG. 3e is a right side view schematically illustrating the exterior of the apparatus for automatically examining the milking machine of FIG. 2.
FIG. 4 is a view illustrating an exemplary waveform of a vacuum pressure measured by a first vacuum sensor and a second vacuum sensor of the apparatus for automatically examining the milking machine of FIG. 2.
FIG. 5 is a flow chart schematically illustrating an algorithm of a "milking machine state analysis program" applied to the apparatus for automatically examining the milking machine.
FIG. 6 is a flow chart schematically illustrating another algorithm of the "milking machine state analysis program" applied to the apparatus for automatically examining the milking machine.
FIG. 7 is a flow chart schematically illustrating still another algorithm of the "milking machine state analysis program" applied to the apparatus for automatically examining the milking machine.
FIG. 8 is a flow chart schematically illustrating yet another algorithm of the "milking machine state analysis program" applied to the apparatus for automatically examining the milking machine.
FIG. 9 is a flow chart schematically illustrating yet still another algorithm of the "milking machine state analysis program" applied to the apparatus for automatically examining the milking machine.
FIG. 10 is a flow chart schematically illustrating yet still another algorithm of the "milking machine state analysis program" applied to the apparatus for automatically examining the milking machine.
FIG. 11 is a flow chart schematically illustrating yet still another algorithm of the "milking machine state analysis program" applied to the apparatus for automatically examining the milking machine.
FIG. 12 is a flow chart schematically illustrating yet still another algorithm of the "milking machine state analysis program" applied to the apparatus for automatically examining the milking machine.
FIG. 13 is a flow chart schematically illustrating yet still another algorithm of the "milking machine state analysis program" applied to the apparatus for automatically examining the milking machine.
FIG. 14 is a flow chart schematically illustrating yet still another algorithm of the "milking machine state analysis program" applied to the apparatus for automatically examining the milking machine.
FIG. 15 is a flow chart schematically illustrating yet still another algorithm of the "milking machine state analysis program" applied to the apparatus for automatically examining the milking machine.

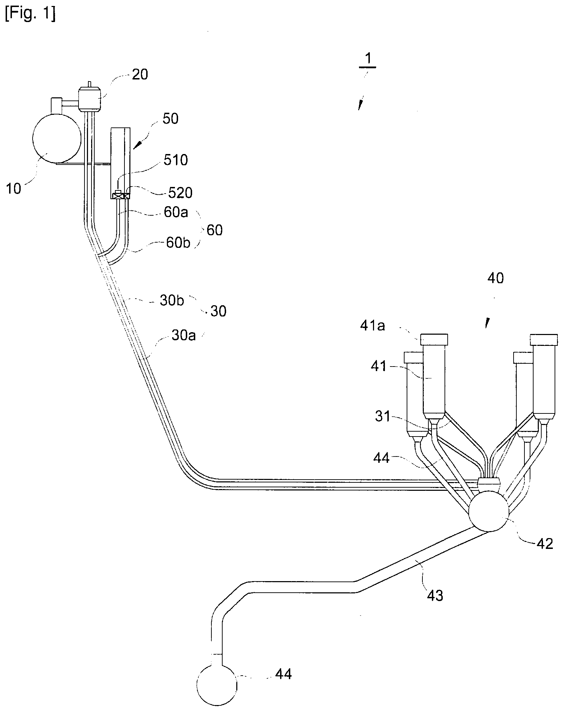

FIG. 1 is a schematic view of an automatic milking machine check system 1 in which an apparatus for automatically examining a milking machine.

### [Automatic milking machine check system 1]

As illustrated in FIG. 1, the automatic milking machine check system 1 comprises a vacuum line 10 configured to supply a vacuum pressure, a pulsator 20 configured to control the vacuum pressure supplied from the vacuum line 10, a vacuum hose 30 connected to a vacuum pressure discharge port of the pulsator 20, a milk unit 40 configured to perform a milking operation on nipple of a dairy cow, and an apparatus 50 for automatically examining a milking machine, which monitors an abnormality of the pulsator 20 and an abnormality of the milk unit 40 in real time. Further, the milk unit 40 comprises a plurality of teat cups 41 configured to respectively have a liner 41a fixed to the nipple of the dairy cow by suction, a milk claw 42 to which the plurality of teat cups are concentrated, a milk hose 43 connected with the milk claw 42, and a milk line 44 connected with the milk hose 43.

According to the preferable embodiment, the automatic milking machine check system 1 may further comprise means for informing the abnormality of the pulsator 20 and/or the abnormality of the milk unit 40 detected by the apparatus 50 for automatically examining the milking machine to an outside, for example, a message board and/or an alarm.

According to the preferable embodiment, the automatic milking machine check system 1 may further comprise means for immediately informing the abnormality of the pulsator 20 and/or the abnormality of the milk unit 40 detected by the apparatus 50 for automatically examining the milking machine to a machine manager, for example, an additional device for automatically transmitting a text message about an abnormality result to a mobile device (e.g., a mobile terminal such as a mobile phone), or automatically informing the abnormality result to a central monitoring device (e.g., a computer) of the machine manager.

The vacuum line 10 is a pipe disposed to provide the vacuum pressure introduced into the pulsator 20. For example, the vacuum line 10 may be connected to a vacuum pump (not shown).

The pulsator 20 controls the supply of the vacuum pressure necessary for the milking operation and periodically contracts or expands the liner 41a configured to form the teat cup 41.

The vacuum hose 30 supplies the vacuum pressure controlled by the pulsator 20 to the teat cup 41.

The milk line 44 is a pipe disposed to collect milk milked from the dairy cow into a milk collection container. For example, the milk line 44 may be connected to the milk collection container, a cooler or the like.

A reference numeral 31 which is not described is a vacuum short hose configured to connect the teat cup 41 with the vacuum hose 30a, and a reference numeral 44 which is not described is a milk short hose configured to connect the teat cup 41 with the milk claw 42.

The apparatus 50 for automatically examining the milking machine is connected with the vacuum hose 30 through a sensor hose 60. Typically, the pulsator 20 is connected with four teat cups 41 through two vacuum hoses 30a and 30b, and two teat cups, i.e., one pair of teat cups is connected to each of the vacuum hoses 30a and 30b. Further, the pulsator 20 alternately supplies the vacuum pressure through the two vacuum hoses 30a and 30b. That is, while the vacuum pressure is supplied to the first vacuum hose 30a of the pulsator 20, the supply of the vacuum pressure to the second vacuum hose 30b is stopped. In the same manner, while the vacuum pressure is supplied to the second vacuum hose 30b of the pulsator 20, the supply of the vacuum pressure to the first vacuum hose 30a is stopped.

The apparatus 50 for automatically examining the milking machine measures and analyzes the vacuum pressure supplied from the pulsator 20 to the milk unit 40 through two vacuum sensors 510 and 520 in real time, and thus monitors for the abnormality of the pulsator 20 and the abnormality of the milk unit 40 in real time.

### [Apparatus 50 for automatically examining the milking machine]

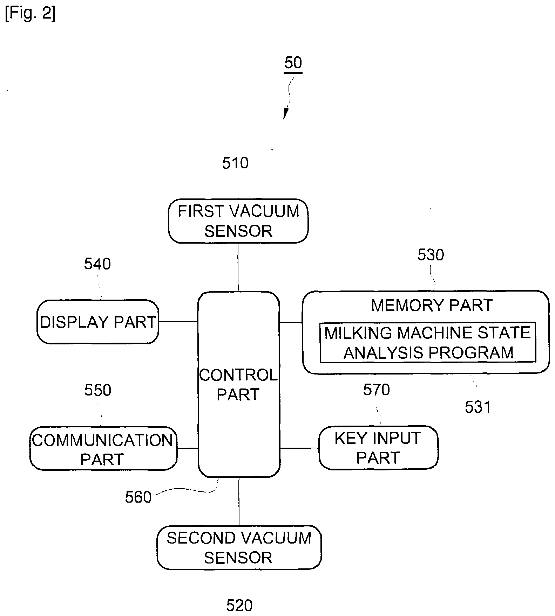

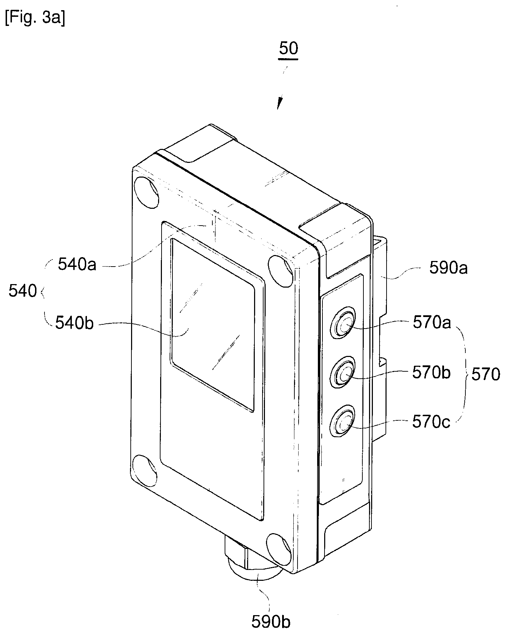

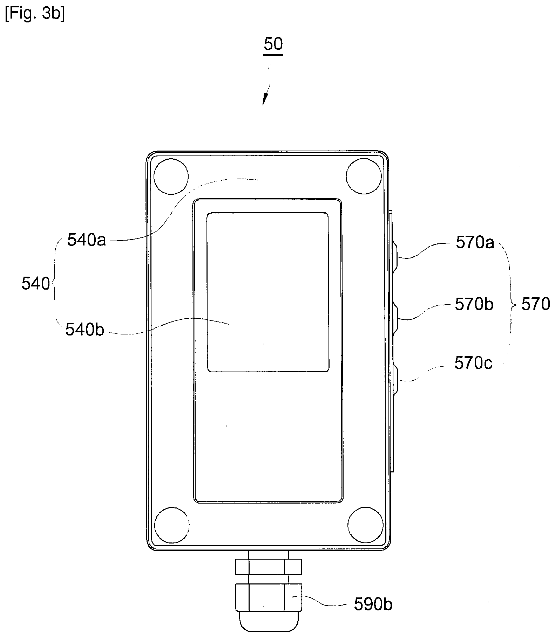

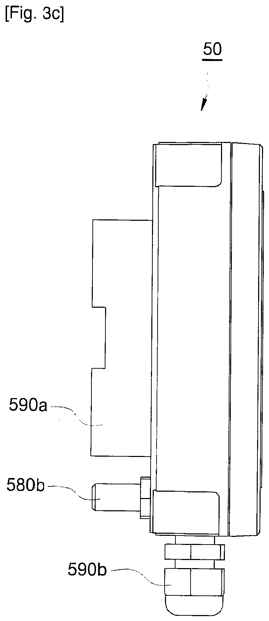

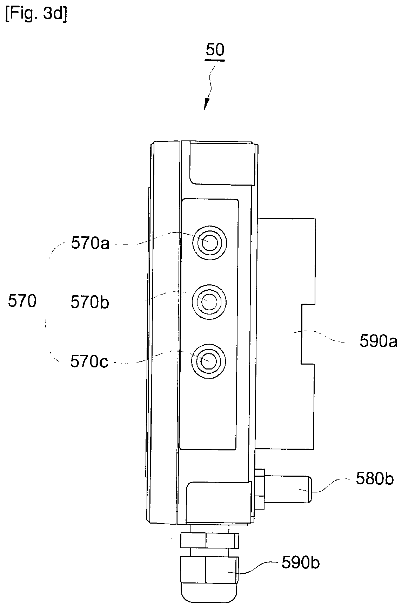

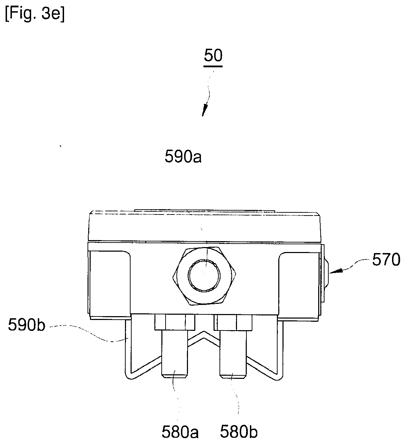

Hereinafter, the detailed configuration of the apparatus 50 for automatically examining the milking machine will be described with reference to FIGS. 2 and 3a to 3e.

FIG. 2 is a block diagram explaining the configuration of the apparatus 50 for automatically examining the milking machine, and FIGS. 3a to 3e are a perspective view, a plane view, a front view, a left side view and a right side view, respectively, schematically illustrating an exterior of the apparatus for automatically examining the milking machine of FIG. 2.

Referring to FIGS. 2 and 3a to 3e, the apparatus 50 for automatically examining the milking machine comprises the first vacuum sensor 510 configured to measure the vacuum pressure transferred through the first vacuum hose 30a, the second vacuum sensor 520 configured to measure the vacuum pressure transferred through the second vacuum hose 30b, a memory part 530 configured to store a milking machine state analysis program 531 for analyzing data measured through the first vacuum sensor 510 and the second vacuum sensor 520, a display part 540 configured to display result data analyzed by the milking machine state analysis program 531, a communication part 550 configured to provide a communication interface between the apparatus 50 for automatically examining the milking machine and an external device (not shown), and a control part 560 configured to control interactions and signal flows among the first vacuum sensor 510, the second vacuum sensor 520, the memory part 530, the display part 540 and the communication part 550.

Further, in the embodiment, the apparatus 50 for automatically examining the milking machine may further comprises a key input part 570 including one or more instruction buttons for the apparatus 50 for automatically examining the milking machine. According to the preferable embodiment, the key input part 570 may comprise a set adjustment button 570a configured to adjust predetermined values for automatic examination of the milking machine, an examination result output button 570b configured to request an output of a result of the automatic examination of the milking machine, and an error type output button 570c configured to request an output of an error type of the milking machine.

In the embodiment, the first vacuum sensor 510 is disposed to measure the vacuum pressure supplied from the pulsator 20 to the teat cups 41 through the first vacuum hose 30a, and, for example, may be installed at a portion adjacent to one end of the first sensor hose 60a connected with the first vacuum hose 30a. To this end, the apparatus 50 for automatically examining the milking machine may comprises a first vacuum port 580a connected with the first sensor hose 60a, and a second vacuum port 580b connected with the second sensor hose 60b.

The first vacuum sensor 580a and the second vacuum sensor 580b are vacuum sensors having general configurations, in which the vacuum pressure in each of the first vacuum hose 30a and the second vacuum hose 30b, which is transferred through each of the first sensor hose 60a and the second sensor hose 60b, is output as an electric signal. For example, the control part 560 may convert the electric signal output from the first and second vacuum sensors 510 and 520 to a degree of vacuum, and thus may generate information of the vacuum pressure in the first and second vacuum hoses 30a and 30b. Further, the control part 560 may store the information of the vacuum pressure in the memory part 530, and/or may display the information of the vacuum pressure to an outside through the display part 540. Further, the control part 560 may store the information of the vacuum pressure in the memory part 530, and then, if necessary, may transmit the information of the vacuum pressure to an external device (not shown) through the communication part 550. For example, the communication part 550 may transmit the information of the vacuum pressure to the external device (not shown) in a communication manner such as RS-232C, RS-485 and RS-422.

The apparatus 50 for automatically examining the milking machine analyzes the vacuum pressure in each of the first and second vacuum hoses 30a and 30b, which is measured by each of the first and second vacuum sensors 510 and 520, and determines the abnormality of the pulsator 20 in real time. To this end, the control part 560 of the apparatus 50 for automatically examining the milking machine calls out the milking machine state analysis program 531 stored in the memory part 530, and performs control operations for determining the abnormality of the pulsator 20 in real time.

For example, when the vacuum pressure in one or more of the first and second vacuum hoses 30a and 30b, which is supplied from the pulsator 20, does not exceed a predetermined trigger standard, the control part 560 may determine the operation abnormality or trouble in the pulsator 20 "according to the milking machine state analysis program 531", and then may control the display part 540 to display the determined result to the outside. Further, for example, when the vacuum pressure in one or more of the first and second vacuum hoses 30a and 30b, which is supplied from the pulsator 20, does not exceed the predetermined trigger standard, the control part 560 may determine the operation abnormality or trouble in the pulsator 20 "according to the milking machine state analysis program 531", and then may control the supply of the vacuum pressure to the milk unit 40 to be stopped.

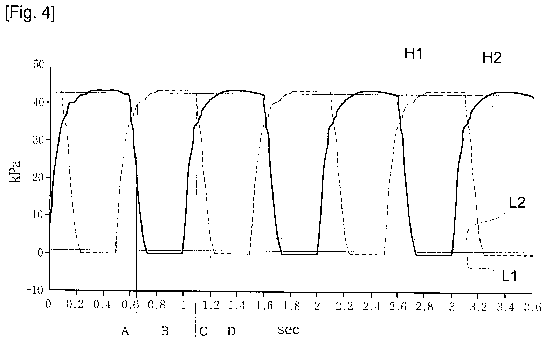

For example, the control part 560 may compare an average value of a maximally maintained section B (referring to FIG. 4) of the vacuum pressure in the first vacuum hose 30a, which is supplied from the pulsator 20, and an average value of a maximally maintained section B (referring to FIG. 4) of the vacuum pressure in the second vacuum hose 30b, which is supplied from the pulsator 20, "according to the milking machine state analysis program 531", and may determine damage to a connection portion between the pulsator 20 and the liner 41a, when a difference therebetween exceeds a predetermined value, and then may control the display part 540 to display the determined result to the outside. Further, for example, the control part 560 may compare an average value of a maximally maintained section B (referring to FIG. 4) of the vacuum pressure in the first vacuum hose 30a, which is supplied from the pulsator 20, and an average value of a maximally maintained section B (referring to FIG. 4) of the vacuum pressure in the second vacuum hose 30b, which is supplied from the pulsator 20, "according to the milking machine state analysis program 531", and may determine the damage to the connection portion between the pulsator 20 and the liner 41a, when a difference therebetween exceeds the predetermined value, and then may control the supply of the vacuum pressure to the milk unit 40 to be stopped.

The display part 540 may comprise display means for outputting letters or numerals, or sounds. According to the preferable embodiment, the display part 540 may comprise an LED lamp display window 540a and a TFT-LCD window 540b. According to the preferable embodiment, the TFT-LCD window 540b may be disposed so that a longitudinal length thereof is longer than a transverse length thereof. Therefore, a waveform graph measured by the first and second vacuum sensors 510 and 520 and various data of the errors may be checked at a look.

The communication part 550 provides the communication interface between the apparatus 50 for automatically examining the milking machine and the external device (not shown). According to the preferable embodiment, the communication part 550 may be a short-range communication interface device including a communication interface such as Bluetooth, infrared light, RS-232C, RS-485 and RS-422, or a broad-band communication interface device via a LAN network, a private network, a mobile communication network, an Internet network, or the like.

A reference numeral 590a is a fixing bracket, and another reference numeral 590b is a wire holder for power and/or communication.

### [Milking machine state analysis program 531]

FIG. 4 is a view illustrating an exemplary waveform of the vacuum pressure measured by the first vacuum sensor 510 and the second vacuum sensor of the apparatus 50 for automatically examining the milking machine. Specifically, a full line waveform of FIG. 4 exemplarily illustrates the vacuum pressure in the first vacuum hose 30a, which is measured by the first vacuum sensor 510, and a dotted line waveform exemplarily illustrates the vacuum pressure in the second vacuum hose 30b, which is measured by the second vacuum sensor 520.

The waveform of the vacuum pressure in the first vacuum hose 30a, which is measured by the first vacuum sensor 510, comprises a rising section A, a maximally maintained section B, a falling section C and a minimally maintained section D which form one cycle. In the same manner, the waveform of the vacuum pressure in the second vacuum hose 30b, which is measured by the second vacuum sensor 520, comprises a rising section A, a maximally maintained section B, a falling section C and a minimally maintained section D which form one cycle.

The vacuum pressure at the rising section A serves to expand the liner 41a. For example, the rising section A may be referred to as a milking preparation section.

The vacuum pressure at the maximally maintained section B serves to maintain the expanded state of the liner 41a. For example, the maximally maintained section B may be referred to as a milking section.

The vacuum pressure at the falling section C serves to contract the liner 41a. For example, the falling section C may be referred to as a massage preparation section.

The vacuum pressure at the minimally maintained section D serves to maintain the contracted state of the liner 41a. For example, the minimally maintained section D may be referred to as a massage section.

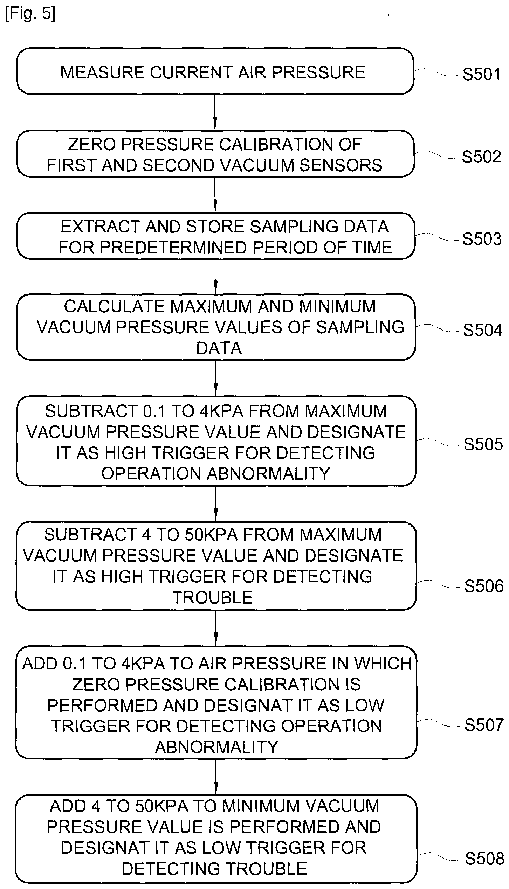

FIG. 5 is a flow chart schematically illustrating an algorithm of the "milking machine state analysis program 531" applied to the apparatus 50 for automatically examining the milking machine. Here, the "milking machine state analysis program 531" is a program which analyzes the waveform of the vacuum pressure measured by the first and second vacuum sensors 510 and 520, and determines the abnormality of the pulsator 20 and the abnormality of the milk unit 40 in real time.

Referring to FIGS. 4 and 5, the "milking machine state analysis program 531" performs an operation of setting, changing or maintaining one or more standards of a high trigger H1 for automatically detecting the operation abnormality, a low trigger L1 of detecting the operation abnormality, a high trigger H2 for detecting the trouble, and a low trigger L2 for detecting the trouble.

To this end, the "milking machine state analysis program 531" performs an operation of a current air pressure according to an initialization signal input by a user through the key input part 570 of the apparatus 50 for automatically examining the milking machine or at the same time when power is on (S501), and performs a zero pressure calibration of the first vacuum sensor 510 and the second vacuum sensor 520 according to a difference between a current actual air pressure value and a previously stored air pressure value (S502).

Then, the "milking machine state analysis program 531" performs an operation of storing data of the waveform of the vacuum pressure measured by the first vacuum sensor 510 and the second vacuum sensor 520 of the apparatus 50 for automatically examining the milking machine for a predetermined period of time (e.g., 1 minute) as sampling data in the memory part 530 (S503).

Then, the "milking machine state analysis program 531" calls out and analyzes the sampling data stored in the memory part 530, and calculates a maximum vacuum pressure value and a minimum vacuum pressure value (S504). Here, the maximum vacuum pressure value is the greatest vacuum pressure value in the waveform of the vacuum pressure contained in the sampling data. Also, the minimum vacuum pressure value is the smallest vacuum pressure value in the waveform of the vacuum pressure contained in the sampling data.

Then, the "milking machine state analysis program 531" subtracts a predetermined value for detecting the operation abnormality from the maximum vacuum pressure value, and designates a subtracted result value as the high trigger H1 for detecting the operation abnormality (S505).

The predetermined value for detecting the operation abnormality may be set or changed according to a user's input. More preferably, the predetermined value for detecting the operation abnormality may be 0.1 to 4 kPa.

Then, the "milking machine state analysis program 531" subtracts a predetermined value for detecting the operation abnormality from the maximum vacuum pressure value, and designates a subtracted result value as the high trigger H2 for detecting the trouble (S506). The predetermined value for detecting the operation abnormality may be set or changed according to the user's input. More preferably, the predetermined value for detecting the operation abnormality may be 4 to 50 kPa.

Then, the "milking machine state analysis program 531" subtracts a predetermined value for detecting the operation abnormality from the air pressure at which the zero pressure calibration is performed at S502, and designates a subtracted result value as the low trigger L1 for detecting the operation abnormality (S507). The predetermined value for detecting the operation abnormality may be set or changed according to the user's input. More preferably, the predetermined value for detecting the operation abnormality may be 0.1 to 4 kPa. Here, the reason why the standard of the low trigger L1 for detecting the operation abnormality is set to the air pressure is to more precisely determine the abnormality of the pulsator 20. For example, for a closing operation (the minimally maintained section D in FIG. 4) of the liner 41a, the vacuum pressure from the pulsator 20 may be the same as the air pressure. Therefore, when the vacuum pressure which is higher by a predetermined value or more than the air pressure is generated from the pulsator 20, the abnormality of the pulsator is determined.

Then, the "milking machine state analysis program 531" adds an predetermined value for detecting the operation abnormality to the minimum vacuum pressure value, and designates an added result value as the low trigger L2 for detecting the trouble (S508). The predetermined value for detecting the operation abnormality may be set or changed according to the user's input. More preferably, the predetermined value for detecting the operation abnormality may be 4 to 50 kPa.

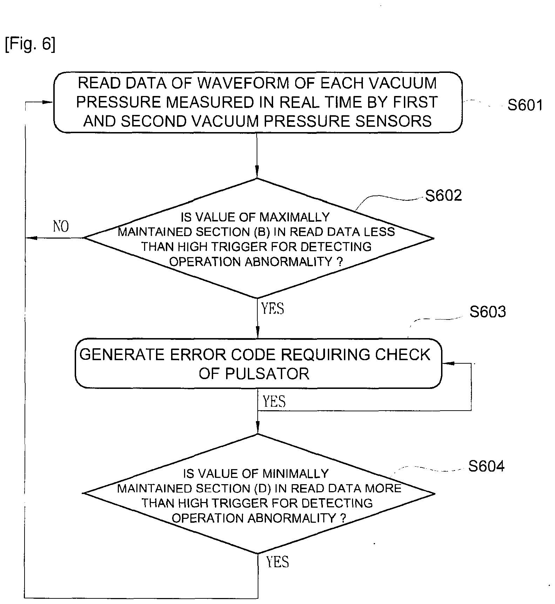

Here, the high trigger H1 for detecting the operation abnormality, which is designated at S505, and the low trigger L1 for detecting the operation abnormality, which is designated at S507, are standard references which determine whether the pulsator 20 is normally operated within a desired operation range (a range of the vacuum pressure). For example, when the vacuum pressure value in the maximally maintained section B of the waveform of the vacuum pressure measured by the first vacuum sensor 510 and/or the second vacuum sensor 520 of the apparatus 50 for automatically examining the milking machine is lower than the high trigger H1 for detecting the operation abnormality, the "milking machine state analysis program 531" determines that the pulsator 20 is out of the desired operation range, and generates an error code requiring a check of the pulsator 20. In the same manner, for example, when the vacuum pressure value in the minimally maintained section D of the waveform of the vacuum pressure measured by the first vacuum sensor 510 and/or the second vacuum sensor 520 of the apparatus 50 for automatically examining the milking machine is higher than the low trigger L1 for detecting the operation abnormality, the "milking machine state analysis program 531" determines that the pulsator 20 is out of the desired operation range, and generates the error code requiring the check of the pulsator 20. The operation process in which the "milking machine state analysis program 531" generates the error code requiring the check of the pulsator 20 through the triggers H1 and L1 for detecting the operation abnormality will be described fully in the description of FIG. 6.

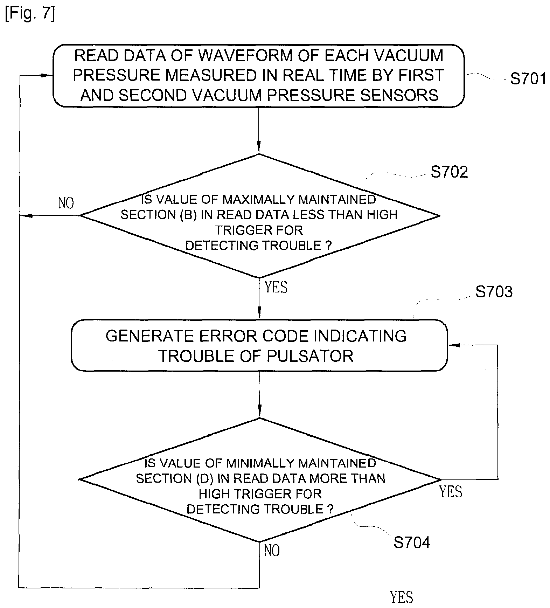

Further, the high trigger H2 for detecting the trouble, which is designated at S506, and the low trigger L2 for detecting the trouble, which is designated at S508, are standard references which determine whether the pulsator 20 has the trouble. For example, when the vacuum pressure value in the maximally maintained section B of the waveform of the vacuum pressure measured by the first vacuum sensor 510 and/or the second vacuum sensor 520 of the apparatus 50 for automatically examining the milking machine is lower than the high trigger H2 for detecting the trouble, the "milking machine state analysis program 531" determines that the pulsator 20 has the trouble, and generates an error code indicating the trouble of the pulsator 20. In the same manner, for example, when the vacuum pressure value in the minimally maintained section D of the waveform of the vacuum pressure measured by the first vacuum sensor 510 and/or the second vacuum sensor 520 of the apparatus 50 for automatically examining the milking machine is higher than the low trigger L2 for detecting the trouble, the "milking machine state analysis program 531" determines that the pulsator 20 has the trouble, and generates the error code indicating the trouble of the pulsator 20. The operation process in which the "milking machine state analysis program 531" generates the error code indicating the trouble of the pulsator 20 through the triggers H2 and L2 for detecting the trouble will be described fully in the description of FIG. 7.

FIG. 6 is a flow chart schematically illustrating another algorithm of the "milking machine state analysis program 531" applied to the apparatus 50 for automatically examining the milking machine.

The "milking machine state analysis program 531" determines whether the pulsator 20 is normally operated using the high trigger H1 for detecting the operation abnormality and/or the low trigger L1 for detecting the operation abnormality.

Specifically, referring to FIGS. 4 and 6, the "milking machine state analysis program 531" performs an operation of reading data of the waveform of the vacuum pressure measured in real time by the first and second vacuum sensors 510 and 520 of the apparatus 50 for automatically examining the milking machine (S601).

Then, the "milking machine state analysis program 531" performs an operation of determining whether a value of the maximally maintained section B in the read data of the waveform of the vacuum pressure is lower than the high trigger H1 for detecting the operation abnormality (S602).

Then, when the result determined at S602 is that the value of the maximally maintained section B is lower than the high trigger H1 for detecting the operation abnormality, the "milking machine state analysis program 531" determines that the pulsator 20 is out of the desired operation range, and generates the error code requiring the check of the pulsator 20 (S603).

Then, the "milking machine state analysis program 531" performs an operation of determining whether a value of the minimally maintained section D in the data of the waveform of the vacuum pressure, which is read at S601, is higher than the low trigger L1 for detecting the operation abnormality (S604).

Then, when the result determined at S604 is that the value of the minimally maintained section D is higher than the low trigger L1 for detecting the operation abnormality (S604), the "milking machine state analysis program 531" determines that the pulsator 20 is out of the desired operation range, and generates the error code requiring the check of the pulsator 20 (S603).

FIG. 7 is a flow chart schematically illustrating still another algorithm of the "milking machine state analysis program 531" applied to the apparatus 50 for automatically examining the milking machine.

The "milking machine state analysis program 531" determines whether the pulsator 20 has the trouble using the high trigger H2 for detecting the trouble and/or the low trigger L2 for detecting the trouble.

Specifically, referring to FIGS. 4 and 7, the "milking machine state analysis program 531" performs an operation of reading data of the waveform of the vacuum pressure measured in real time by the first and second vacuum sensors 510 and 520 of the apparatus 50 for automatically examining the milking machine (S701).

Then, the "milking machine state analysis program 531" performs an operation of determining whether a value of the maximally maintained section B in the read data of the waveform of the vacuum pressure is lower than the high trigger H2 for detecting the trouble (S702).

Then, when the result determined at S702 is that the value of the maximally maintained section B is lower than the high trigger H2 for detecting the trouble, the "milking machine state analysis program 531" determines that the pulsator 20 has the trouble, and generates the error code requiring replacement or repair of the pulsator 20 (S703).

Then, the "milking machine state analysis program 531" performs an operation of determining whether a value of the minimally maintained section D in the data of the waveform of the vacuum pressure, which is read at S701, is higher than the low trigger L2 for detecting the trouble (S704).

Then, when the result determined at S704 is that the value of the minimally maintained section D is higher than the low trigger L2 for detecting the trouble, the "milking machine state analysis program 531" determines that the pulsator 20 has the trouble, and generates the error code requiring the replacement or repair of the pulsator 20 (S703).

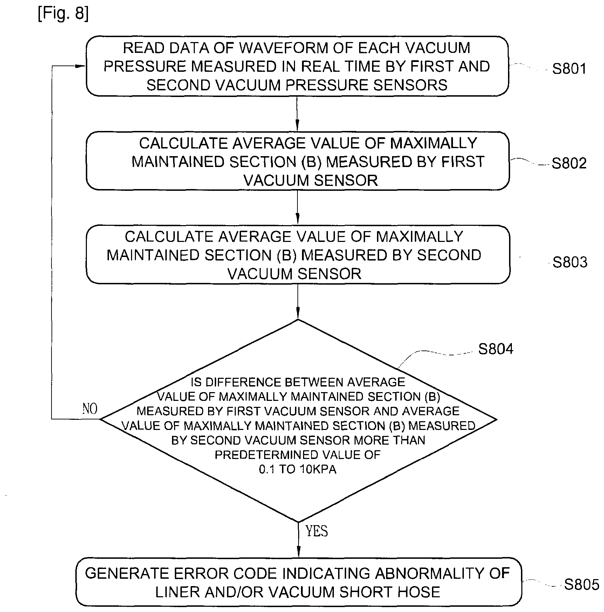

FIG. 8 is a flow chart schematically illustrating yet another algorithm of the "milking machine state analysis program 531" applied to the apparatus 50 for automatically examining the milking machine.

The "milking machine state analysis program 531" determines an abnormality of the liner 41a and/or the vacuum short hose 31 based on a deviation of the maximally maintained section B in the data of the waveform of the vacuum pressure measured in real time by the first and second vacuum sensors 510 and 520.

Specifically, referring to FIGS. 4 and 8, the "milking machine state analysis program 531" performs an operation of reading data of the waveform of the vacuum pressure measured in real time by the first and second vacuum sensors 510 and 520 of the apparatus 50 for automatically examining the milking machine (S801).

Then, the "milking machine state analysis program 531" performs an operation of calculating an average value of the maximally maintained section B, which is measured by the first vacuum sensor 510 (S802).

Then, the "milking machine state analysis program 531" performs an operation of calculating an average value of the maximally maintained section B, which is measured by the second vacuum sensor 520 (S803).

Here, the average value of the maximally maintained section B means an average value of waveform values of the vacuum pressure measured in real time at the maximally maintained section B.

Then, the "milking machine state analysis program 531" performs an operation of determining whether a difference between the average value of the maximally maintained section B, which is measured by the first vacuum sensor 510, and the average value of the maximally maintained section B, which is measured by the second vacuum sensor 520, exceeds a predetermined value of 0.1 to 10 kPa (S804). According to the preferable embodiment, for example, the predetermined value of 0.1 to 10 kPa may be a value which is predetermined through the key input part 570 by the user.

Then, when the result determined at S804 is that the difference between the average value of the maximally maintained section B, which is measured by the first vacuum sensor 510, and the average value of the maximally maintained section B, which is measured by the second vacuum sensor 520, exceeds the predetermined value of 0.1 to 10kPa, the "milking machine state analysis program 531" performs an operation of generating an error code indicating the abnormality of the liner 41a and/or the vacuum short hose 31 (S805).

Since the vacuum pressure measured by the first vacuum sensor 510 and the vacuum pressure measured by the second vacuum sensor 520 come from the same vacuum supply source (e.g., the same vacuum pump (not shown), the vacuum line 10 and the pulsator 20), they should be theoretically the same as each other. However, when they are different, and the difference is more than a predetermined deviation (for example, 0.1 to 10 kPa), the algorithm regards the liner 41a and/or the vacuum short hose 31 as having an abnormality, and generates the error code requiring a check of the liner 41a and/or the vacuum short hose 31.

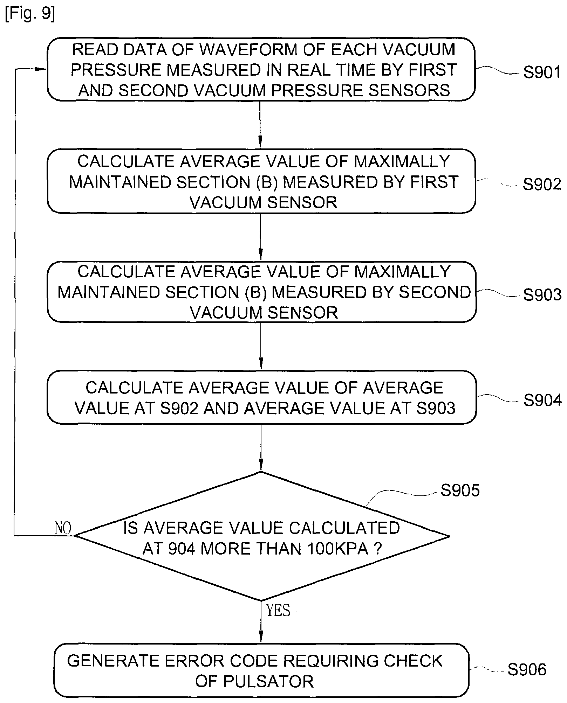

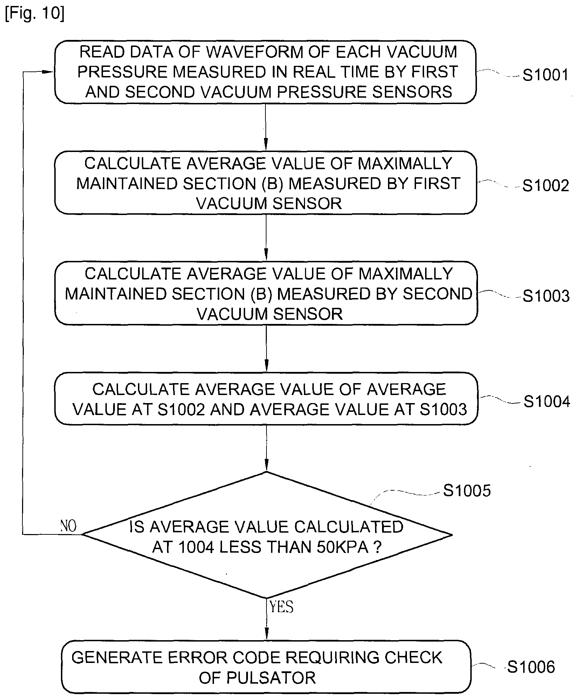

FIGS. 9 and 10 are flow charts schematically illustrating yet still another algorithm of the "milking machine state analysis program 531" applied to the apparatus 50 for automatically examining the milking machine.

The "milking machine state analysis program 531" automatically determines an abnormality of the pulsator 20 based on an average value of the maximally maintained section B in the data of the waveform of the vacuum pressure measured in real time by the first and second vacuum sensors 510 and 520.

Specifically, referring to FIGS. 4 and 9, the "milking machine state analysis program 531" performs an operation of reading data of the waveform of the vacuum pressure measured in real time by the first and second vacuum sensors 510 and 520 of the apparatus 50 for automatically examining the milking machine (S901).

Then, the "milking machine state analysis program 531" performs an operation of calculating an average value of the maximally maintained section B, which is measured by the first vacuum sensor 510 (S902).

Then, the "milking machine state analysis program 531" performs an operation of calculating an average value of the maximally maintained section B, which is measured by the second vacuum sensor 520 (S903).

Then, the "milking machine state analysis program 531" performs an operation of calculating an average value of the average value calculated at S902 and the average value calculated at S903 (S904).

Then, the "milking machine state analysis program 531" performs an operation of determining whether the average value calculated at S904 exceeds an upper limit value of the vacuum pressure (S905). In the preferable embodiment, the upper limit value of the vacuum pressure may be a value which is predetermined by the user through, for example, the key input part 570. In the preferable embodiment, the upper limit value of the vacuum pressure may be a value which is predetermined within a range of 30 to 100 kPa (for example, 100 kPa in the drawing).

Then, when the result determined at S905 is that the average value calculated at S904 exceeds the upper limit value of the vacuum pressure, the "milking machine state analysis program 531" generates an error code requiring a check of the pulsator 20 (S906).

The algorithm regards the pulsator 20 as having the abnormality, when a vacuum pressure which is generated by the first vacuum sensor 510 and the second vacuum sensor 520 is higher than the usually used vacuum pressure (in the predetermined vacuum pressure range) and generates the error code requiring the check of the pulsator 20.

FIG. 10 is a flow chart schematically illustrating yet still another algorithm of the "milking machine state analysis program 531" applied to the apparatus 50 for automatically examining the milking machine. The algorithm of FIG. 10 is very similar to that of FIG. 9.

Specifically, referring to FIGS. 4 and 10, the "milking machine state analysis program 531" performs an operation of reading data of the waveform of the vacuum pressure measured in real time by the first and second vacuum sensors 510 and 520 of the apparatus 50 for automatically examining the milking machine (S1001).

Then, the "milking machine state analysis program 531" performs an operation of calculating an average value of the maximally maintained section B, which is measured by the first vacuum sensor 510 (S1002).

Then, the "milking machine state analysis program 531" performs an operation of calculating an average value of the maximally maintained section B, which is measured by the second vacuum sensor 520 (S1003).

Then, the "milking machine state analysis program 531" performs an operation of calculating an average value of the average value calculated at S1002 and the average value calculated at S1003 (S1004).

Then, the "milking machine state analysis program 531" performs an operation of determining whether the average value calculated at S1004 exceeds a lower limit value of the vacuum pressure (S1005). In the preferable embodiment, the lower limit value of the vacuum pressure may be a value which is predetermined by the user through, for example, the key input part 570. In the preferable embodiment, the upper limit value of the vacuum pressure may be a value which is predetermined within a range of 0 to 50 kPa (for example, 50 kPa in the drawing).

Then, when the result determined at S1005 is that the average value calculated at S1004 exceeds the lower limit value of the vacuum pressure, the "milking machine state analysis program 531" generates an error code requiring a check of the pulsator 20 (S1006).

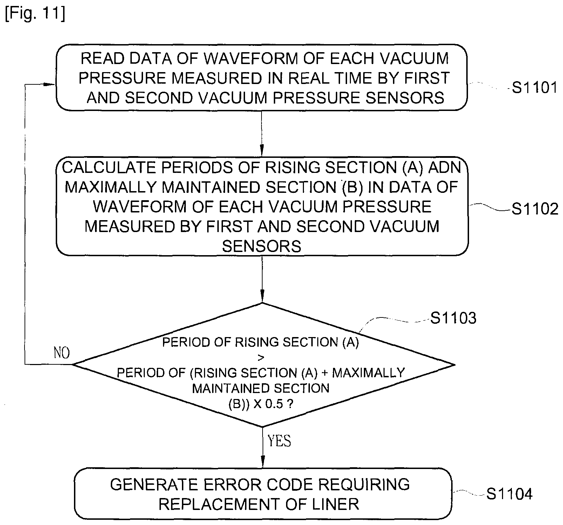

The algorithm regards the pulsator 20 as having the abnormality, when a vacuum pressure which is generated by the first vacuum sensor 510 and the second vacuum sensor 520 is lower than the usually used vacuum pressure (in the predetermined vacuum pressure range) and generates the error code requiring the check of the pulsator 20. FIG. 11 is a flow chart schematically illustrating yet still another algorithm of the "milking machine state analysis program 531" applied to the apparatus 50 for automatically examining the milking machine.

The "milking machine state analysis program 531" automatically determines an abnormality of the liner 41a based on a ratio of a period of the rising section A and a period of the maximally maintained section B in the data of the waveform of the vacuum pressure measured in real time by the first and second vacuum sensors 510 and 520.

Specifically, referring to FIGS. 4 and 11, the "milking machine state analysis program 531" performs an operation of reading data of the waveform of the vacuum pressure measured in real time by the first and second vacuum sensors 510 and 520 of the apparatus 50 for automatically examining the milking machine (S1101).

Then, the "milking machine state analysis program 531" performs an operation of calculating the period of the rising section A and the period of the maximally maintained section B in the waveform of the vacuum pressure measured by each of the first and second vacuum sensors 510 and 520 (S1102).

Then, the "milking machine state analysis program 531" performs an operation of determining whether the period of the rising section A calculated at S1102 exceeds a desired multiple of a period in which the rising section A and the maximally maintained section B are added (S1103). In the preferable embodiment, the desired multiple may be a predetermined value which is predetermined by the user through, for example, the key input part 570. In the preferable embodiment, the desired multiple may be a predetermined value which is predetermined within a range of 0.5 to 1.0 by the user.

Then, when the result determined at S1103 is that the period of the rising section A calculated at S1102 exceeds the desired multiple (e.g., 0.5 in the drawing) of the period in which the rising section A and the maximally maintained section B are added, the "milking machine state analysis program 531" generates an error code requiring the replacement of the liner 41a (S1104). When the period of the rising section A is greater by 50% or more than the period in which the rising section A and the maximally maintained section B are added, the algorithm regards the liner 41a as no longer of any use, and generates the error code requiring the replacement of the liner 41a. For example, when the period of the rising section A is greater by 50% or more than the period in which the rising section A and the maximally maintained section B are added, a milking preparation process becomes too long, and thus milking efficiency may be lowered.

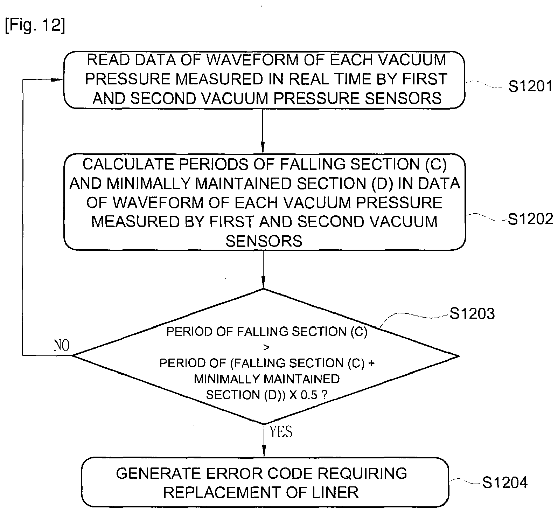

FIG. 12 is a flow chart schematically illustrating yet still another algorithm of the "milking machine state analysis program 531" applied to the apparatus 50 for automatically examining the milking machine. The algorithm of FIG. 12 is very similar to that of FIG. 11.

The "milking machine state analysis program 531" according to one embodiment of the present invention automatically determines an abnormality of the liner 41a based on a ratio of a period of the falling section C and a period of the minimally maintained section D in the data of the waveform of the vacuum pressure measured in real time by the first and second vacuum sensors 510 and 520.

Specifically, referring to FIGS. 4 and 12, the "milking machine state analysis program 531" performs an operation of reading data of the waveform of the vacuum pressure measured in real time by the first and second vacuum sensors 510 and 520 of the apparatus 50 for automatically examining the milking machine (S1201).

Then, the "milking machine state analysis program 531" performs an operation of calculating the period of the falling section C and the period of the minimally maintained section D in the waveform of the vacuum pressure measured by each of the first and second vacuum sensors 510 and 520 (S1202).

Then, the "milking machine state analysis program 531" performs an operation of determining whether the period of the falling section C calculated at S1202 exceeds a desired multiple of a period in which the falling section C and the minimally maintained section D are added (S1203). In the preferable embodiment, the desired multiple may be a predetermined value which is predetermined by the user through, for example, the key input part 570. In the preferable embodiment, the desired multiple may be a predetermined value which is predetermined within a range of 0.5 to 1.0 by the user.

Then, when the result determined at S1203 is that the period of the falling section C exceeds the desired multiple (e.g., 0.5 in the drawing) of the period in which the falling section C and the minimally maintained section D are added, the "milking machine state analysis program 531" generates an error code requiring the replacement of the liner 41a (S1204). When the period of the falling section C is greater by 50% or more than the period in which the falling section C and the minimally maintained section D are added, the algorithm regards the liner 41a as no longer of any use, and generates the error code requiring the replacement of the liner 41a. For example, when the period of the falling section C is greater by 50% or more than the period in which the falling section C and the minimally maintained section D are added, a massage preparation process becomes too long, and thus milking efficiency may be lowered.

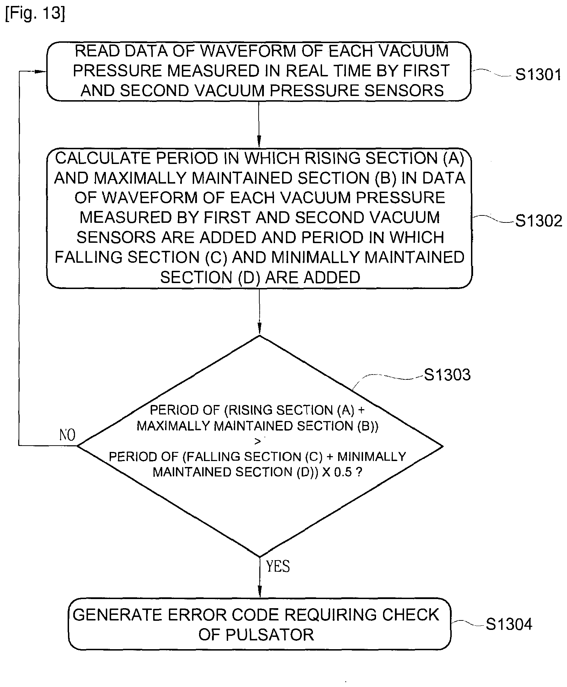

FIG. 13 is a flow chart schematically illustrating yet still another algorithm of the "milking machine state analysis program 531" applied to the apparatus 50 for automatically examining the milking machine.

The "milking machine state analysis program 531" according to one embodiment of the present invention automatically determines an abnormality of the pulsator 20 based on a ratio of a period in which the rising section A and the maximally maintained section B are added and a period in which the falling section C and the minimally maintained section D are added in the data of the waveform of the vacuum pressure measured in real time by the first and second vacuum sensors 510 and 520.

Specifically, referring to FIGS. 4 and 13, the "milking machine state analysis program 531" performs an operation of reading data of the waveform of the vacuum pressure measured in real time by the first and second vacuum sensors 510 and 520 of the apparatus 50 for automatically examining the milking machine (S1301).

Then, the "milking machine state analysis program 531" performs an operation of calculating the period in which the rising section A and the maximally maintained section B are added and the period in which the falling section C and the minimally maintained section D are added in the waveform of the vacuum pressure measured by each of the first and second vacuum sensors 510 and 520 (S1302).

Then, the "milking machine state analysis program 531" performs an operation of determining whether the period, in which the rising section A and the maximally maintained section B are added, calculated at S1302 exceeds a desired multiple of the period, in which the falling section C and the minimally maintained section D are added, calculated at S1302 (S1303). In the preferable embodiment, the desired multiple may be a predetermined value which is predetermined by the user through, for example, the key input part 570. In the preferable embodiment, the desired multiple may be a predetermined value which is predetermined within a range of 0.5 to 1.0 by the user.

Then, when the result determined at S1303 is that the period in which the rising section A and the maximally maintained section B are added exceeds the desired multiple (e.g., 0.5 in the drawing) of the period in which the falling section C and the minimally maintained section D are added, the "milking machine state analysis program 531" generates an error code requiring a check of the pulsator 20 (S1304).

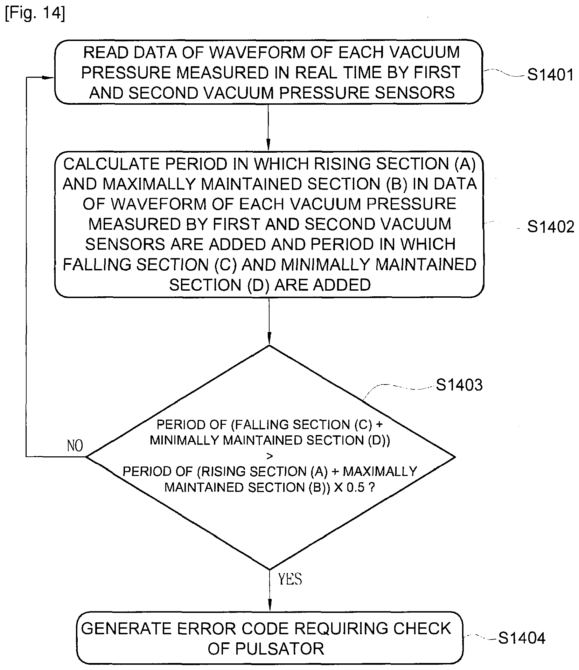

FIG. 14 is a flow chart schematically illustrating yet still another algorithm of the "milking machine state analysis program 531" applied to the apparatus 50 for automatically examining the milking machine. The algorithm of FIG. 14 is very similar to that of FIG. 13.

Specifically, referring to FIGS. 4 and 14, the "milking machine state analysis program 531" performs an operation of reading data of the waveform of the vacuum pressure measured in real time by the first and second vacuum sensors 510 and 520 of the apparatus 50 for automatically examining the milking machine (S1401).

Then, the "milking machine state analysis program 531" performs an operation of calculating a period in which the rising section A and the maximally maintained section B are added and a period in which the falling section C and the minimally maintained section D are added in the waveform of the vacuum pressure measured by each of the first and second vacuum sensors 510 and 520 (S1402).

Then, the "milking machine state analysis program 531" performs an operation of determining whether the period, in which the falling section C and the minimally maintained section D are added, calculated at S1402 exceeds a desired multiple of the period, in which the rising section A and the maximally maintained section B are added, calculated at S1402 (S1403). In the preferable embodiment, the desired multiple may be a predetermined value which is predetermined by the user through, for example, the key input part 570. In the preferable embodiment, the desired multiple may be a predetermined value which is predetermined within a range of 0.5 to 1.0 by the user.

Then, when the result determined at S1403 is that the period in which the falling section C and the minimally maintained section D are added exceeds the desired multiple (e.g., 0.5 in the drawing) of the period in which the rising section A and the maximally maintained section B are added, the "milking machine state analysis program 531" generates an error code requiring a check of the pulsator 20 (S1404).

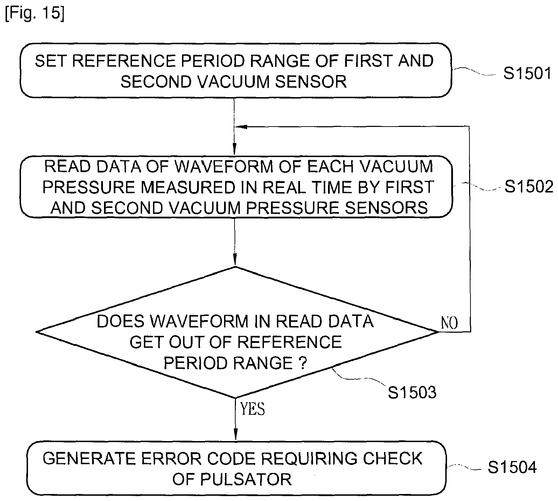

FIG. 15 is a flow chart schematically illustrating yet still another algorithm of the "milking machine state analysis program 531" applied to the apparatus 50 for automatically examining the milking machine.

The "milking machine state analysis program 531" automatically determines an abnormality of the pulsator 20 based on a ratio of a period of the waveform in the data of the waveform of the vacuum pressure measured in real time by the first and second vacuum sensors 510 and 520.

Specifically, referring to FIGS. 4 and 15, the "milking machine state analysis program 531" provides a menu item which allows the user to set a reference period range of the first and second vacuum sensors 510 and 520 through the display part 540 of the apparatus 50 for automatically examining the milking machine, receives a value of the reference period range from the user through the key input part 570, and then stores the value in the memory part 530 (S1501).

Then, the "milking machine state analysis program 531" performs an operation of reading data of the waveform of the vacuum pressure measured by each of the first and second vacuum sensors 510 and 520 (S1502).

Then, the "milking machine state analysis program 531" performs an operation of determining an existence of the waveform which is out of the value of the reference period range predetermined at S1501 (S1503). The value of the reference period range may be set or changed by the user's input. More preferably, the value of the reference period range may be 2/3 T (a pulsation cycle of 90 times per minute) to 3 T (a pulsation cycle of 20 times per minute).

Then, when the existence of the waveform, which is out of the value of the reference period range, in the read waveforms is determined at S1503, the "milking machine state analysis program 531" generates an error code requiring a check of the pulsator 20 (S1504).

The "milking machine state analysis program 531" which performs each operation of the algorithms of FIGS. 5 to 15, as described above, may be previously loaded in the memory part 240, when the apparatus for automatically examining the milking machine is released, or may be loaded later in in the memory part 240 through a portable storage medium such as a USB or by downloading through a network.

Further, it would be obvious to those skilled in the art that one or more of the algorithms of FIGS. 5 to 15 may be separately executed or may be combined into one algorithm and then executed. Exemplary embodiments have been described here above. The scope of the invention is only limited by the appended claims.

## Claims

1. A method of automatically examining a milking machine using an apparatus for automatically examining the milking machine, which comprises a first vacuum sensor configured to measure a vacuum pressure transferred through a first vacuum hose, a second vacuum sensor configured to measure a vacuum pressure transferred through a second vacuum hose, and a control part configured to control the first and second vacuum sensors,
wherein the control part comprises:
an operation (a) of measuring a current air pressure;
an operation (b) of performing a zero pressure calibration of the first vacuum sensor and the second vacuum sensor according to a difference between the measured current air pressure and a previously stored air pressure;
an operation (c) of storing sampling data measured for a predetermined period of time by the first and second vacuum sensors;
an operation (d) of analyzing the sampling data stored in the operation (c) and calculating a maximum vacuum pressure value and a minimum vacuum pressure value of the sampling data; the method being **characterised in** further comprising:
an operation (e) subtracting a value of 0.1 to 4 kPa from the maximum vacuum pressure value of the sampling data and designating a subtracted value as a high trigger for detecting an operation abnormality;
an operation (f) of subtracting a value of 4 to 50 kPa from the maximum vacuum pressure value of the sampling data and designating a subtracted value as a high trigger for detecting a trouble;
an operation (g) of adding a value of 0.1 to 4 kPa to an air pressure value in which the zero pressure calibration is performed in the operation (b) and designating an added value as a low trigger for detecting the operation abnormality; and
an operation (h) of adding a value of 4 to 50 kPa to the minimum vacuum pressure value of the sampling data and designating an added value as a low trigger for detecting the trouble.

2. The method of claim **1,** wherein, after the operation (h), the control part further comprises:
an operation (i) of reading data of the waveform of the vacuum pressure measured in real time by each of the first and second vacuum sensors;
an operation (j) of determining whether a value of a maximally maintained section (B) of the waveform in the read data is less than the high trigger for detecting the operation abnormality;
an operation (k) of generating an error code requiring a check of the pulsator when a result determined in the operation (j) is that the value of the maximally maintained section (B) of the waveform in the read data is less than the high trigger for detecting the operation abnormality;
an operation (l) of determining whether a value of a minimally maintained section (D) of the waveform in the read data is more than the low trigger for detecting the operation abnormality; and
an operation (m) of generating an error code requiring the check of the pulsator 20 when a result determined in the operation (l) is that the value of the minimally maintained section (D) of the waveform in the read data is more than the low trigger for detecting the operation abnormality.

3. The method of claim **1,** wherein, after the operation (h), the control part further comprises:
an operation (i) of reading data of the waveform of the vacuum pressure measured in real time by each of the first and second vacuum sensors;
an operation (j) of determining whether a value of a maximally maintained section (B) of the waveform in the read data is less than the high trigger for detecting the trouble;
an operation (k) of generating an error code indicating the trouble of the pulsator when a result determined in the operation (j) is that the value of the maximally maintained section (B) of the waveform in the read data is less than the high trigger for detecting the trouble;
an operation (l) of determining whether a value of a minimally maintained section (D) of the waveform in the read data is more than the low trigger for detecting the trouble; and
an operation (m) of generating an error code indicating the trouble of the pulsator when a result determined in the operation (l) is that the value of the minimally maintained section (D) of the waveform in the read data is more than the low trigger for detecting the trouble.

## Patentansprüche

1. Verfahren zum automatischen Untersuchen einer Melkmaschine mit Hilfe einer Vorrichtung zum automatischen Untersuchen der Melkmaschine, die einen ersten Vakuumsensor, der so konfiguriert ist, dass er einen über einen ersten Vakuumschlauch übergeführten Unterdruck misst, einen zweiten Vakuumsensor, der so konfiguriert ist, dass er einen über einen zweiten Vakuumschlauch übergeführten Unterdruck misst, und ein Steuerungsteil, das so konfiguriert ist, dass es den ersten und den zweiten Vakuumsensor steuert, umfasst;
wobei das Steuerungsteil Folgendes ausführt:
einen Arbeitsschritt (a), in dem ein aktueller Luftdruck gemessen wird;
einen Arbeitsschritt (b), in dem eine Nulldruckeichung des ersten Vakuumsensors und des zweiten Vakuumsensors gemäß einer Differenz zwischen dem gemessenen aktuellen Luftdruck und einem zuvor gespeicherten Luftdruck durchgeführt wird;
einen Arbeitsschritt (c), in dem Stichprobendaten gespeichert werden, die von dem ersten und dem zweiten Vakuumsensor über einen vorbestimmten Zeitraum gemessen wurden;
einen Arbeitsschritt (d), in dem die in Arbeitsschritt (c) gespeicherten Stichprobendaten analysiert werden und ein maximaler Unterdruckwert und ein minimaler Unterdruckwert der Stichprobendaten berechnet werden;
wobei das Verfahren **dadurch gekennzeichnet ist, dass** es weiterhin umfasst:
einen Arbeitsschritt (e), in dem ein Wert von 0,1 bis 4 kPa von dem maximalen Unterdruckwert der Stichprobendaten subtrahiert wird und die Differenz als hoher Auslöser zum Nachweisen einer Betriebsabweichung bezeichnet wird;
einen Arbeitsschritt (f), in dem ein Wert von 4 bis 50 kPa von dem maximalen Unterdruckwert der Stichprobendaten subtrahiert wird und die Differenz als hoher Auslöser zum Nachweisen einer technischen Störung bezeichnet wird;
einen Arbeitsschritt (g), in dem ein Wert von 0,1 bis 4 kPa zu einem Luftdruckwert, bei der in Arbeitsschritt (b) die Nulldruckeichung durchgeführt wird, addiert wird und die Summe als tiefer Auslöser zum Nachweisen der Betriebsabweichung bezeichnet wird; und
einen Arbeitsschritt (h), in dem ein Wert von 4 bis 50 kPa zu dem minimalen Unterdruckwert der Stichprobendaten addiert wird und die Summe als tiefer Auslöser zum Nachweisen der technischen Störung bezeichnet wird.

2. Verfahren gemäß Anspruch 1, wobei das Steuerungsteil nach dem Arbeitsschritt (h) weiterhin ausführt:
einen Arbeitsschritt (i), in dem Daten der Wellenform des Unterdrucks, der von dem ersten und dem zweiten Vakuumsensor jeweils in Echtzeit gemessen wird, eingelesen werden;
einen Arbeitsschritt (j), in dem bestimmt wird, ob ein Wert eines maximal aufrechterhaltenen Abschnitts (B) der Wellenform in den eingelesenen Daten kleiner ist als der hohe Auslöser zum Nachweisen der Betriebsabweichung;
einen Arbeitsschritt (k), in dem ein Fehlercode, der eine Überprüfung des Pulsators erfordert, erzeugt wird, wenn das in Arbeitsschritt (j) bestimmte Ergebnis besagt, dass der Wert eines maximal aufrechterhaltenen Abschnitts (B) der Wellenform in den eingelesenen Daten kleiner ist als der hohe Auslöser zum Nachweisen der Betriebsabweichung;
einen Arbeitsschritt (l), in dem bestimmt wird, ob ein Wert eines minimal aufrechterhaltenen Abschnitts (D) der Wellenform in den eingelesenen Daten größer ist als der tiefe Auslöser zum Nachweisen der Betriebsabweichung; und
einen Arbeitsschritt (m), in dem ein Fehlercode, der eine Überprüfung des Pulsators 20 erfordert, erzeugt wird, wenn das in Arbeitsschritt (l) bestimmte Ergebnis besagt, dass der Wert des maximal aufrechterhaltenen Abschnitts (D) der Wellenform in den eingelesenen Daten größer ist als der tiefe Auslöser zum Nachweisen der Betriebsabweichung.

3. Verfahren gemäß Anspruch 1, wobei das Steuerungsteil nach dem Arbeitsschritt (h) weiterhin ausführt:
einen Arbeitsschritt (i), in dem Daten der Wellenform des Unterdrucks, der von dem ersten und dem zweiten Vakuumsensor jeweils in Echtzeit gemessen wird, eingelesen werden;
einen Arbeitsschritt (j), in dem bestimmt wird, ob ein Wert eines maximal aufrechterhaltenen Abschnitts (B) der Wellenform in den eingelesenen Daten kleiner ist als der hohe Auslöser zum Nachweisen der technischen Störung;
einen Arbeitsschritt (k), in dem ein Fehlercode, der eine Überprüfung des Pulsators erfordert, erzeugt wird, wenn das in Arbeitsschritt (j) bestimmte Ergebnis besagt, dass der Wert eines maximal aufrechterhaltenen Abschnitts (B) der Wellenform in den eingelesenen Daten kleiner ist als der hohe Auslöser zum Nachweisen der technischen Störung;
einen Arbeitsschritt (I), in dem bestimmt wird, ob ein Wert eines minimal aufrechterhaltenen Abschnitts (D) der Wellenform in den eingelesenen Daten größer ist als der tiefe Auslöser zum Nachweisen der technischen Störung; und
einen Arbeitsschritt (m), in dem ein Fehlercode, der eine Überprüfung des Pulsators erfordert, erzeugt wird, wenn das in Arbeitsschritt (I) bestimmte Ergebnis besagt, dass der Wert des minimal aufrechterhaltenen Abschnitts (D) der Wellenform in den eingelesenen Daten größer ist als der tiefe Auslöser zum Nachweisen der technischen Störung.

## Revendications

1. Procédé pour examiner automatiquement une trayeuse en utilisant un dispositif pour examiner automatiquement la trayeuse comprenant un premier capteur de vide configuré pour mesurer une pression de vide transférée à travers un premier tuyau de vide, un second capteur de vide configuré pour mesurer une pression de vide transférée à travers un second tuyau de vide, et une partie commande configurée pour commander les premier et second capteurs de vide,
dans lequel la partie commande effectue :
une activité (a) de mesurer une pression de l'air actuelle,
une activité (b) d'effectuer un étalonnage de pression zéro du premier capteur de vide et du second capteur de vide selon une différence entre la pression de l'air actuelle mesurée et une pression de l'air précédemment stockée,
une activité (c) de stocker des données d'échantillonnage mesurées pendant une période prédéterminée par les premier et second capteurs de vide,
une activité (d) d'analyser les données d'échantillonnage stockées dans l'activité (c) et de calculer une valeur de pression de vide maximale et une valeur de pression de vide minimale parmi des données d'échantillonnage,
le procédé étant **caractérisé en ce qu'**il comprend en outre :
une activité (e) de soustraire une valeur de 0,1 à 4 kPa de la valeur de pression de vide maximale des données d'échantillonnage et de désigner la différence obtenue comme valeur de déclenchement supérieure pour détecter une anomalie d'activité,
une activité (f) de soustraire une valeur de 4 à 50 kPa de la valeur de pression de vide maximale des données d'échantillonnage et de désigner la différence obtenue comme valeur de déclenchement supérieure pour détecter une panne,
une activité (g) d'additionner une valeur de 0,1 à 4 kPa à une valeur de pression de l'air à laquelle l'étalonnage de pression zéro est effectué dans l'activité (b) et de désigner la somme obtenue comme valeur de déclenchement inférieure pour détecter l'anomalie d'activité, et
une activité (h) d'additionner une valeur de 4 à 50 kPa à la valeur de pression de vide minimale des données d'échantillonnage et de désigner la somme obtenue comme valeur de déclenchement inférieure pour détecter la panne.

2. Procédé selon la revendication 1, dans lequel, après l'activité (h), la partie commande effectue en outre :
une activité (i) de lire des données de la forme d'onde de la pression de vide mesurée en temps réel par chacun des premier et second capteurs de vide,
une activité (j) de déterminer si une valeur d'une section maintenue maximale (B) de la forme d'onde dans les données lues est inférieure à la valeur de déclenchement supérieure pour détecter l'anomalie d'activité,
une activité (k) de générer un code d'erreur nécessitant un contrôle du pulsateur quand le résultat déterminé dans l'activité (j) est que la valeur de la section maintenue maximale (B) de la forme d'onde dans les données lues est inférieure à la valeur de déclenchement supérieure pour détecter l'anomalie d'activité,
une activité (I) de déterminer si une valeur d'une section maintenue minimale (D) de la forme d'onde dans les données lues est supérieure à la valeur de déclenchement inférieure pour détecter l'anomalie d'activité, et
une activité (m) de générer un code d'erreur nécessitant un contrôle du pulsateur 20 quand le résultat déterminé dans l'activité (I) est que la valeur de la section maintenue minimale (D) de la forme d'onde dans les données lues est supérieure à la valeur de déclenchement inférieure pour détecter l'anomalie d'activité.

3. Procédé selon la revendication 1, dans lequel, après l'activité (h), la partie commande effectue en outre :
une activité (i) de lire des données de la forme d'onde de la pression de vide mesurée en temps réel par chacun des premier et second capteurs de vide,
une activité (j) de déterminer si une valeur d'une section maintenue maximale (B) de la forme d'onde dans les données lues est inférieure à la valeur de déclenchement supérieure pour détecter la panne,
une activité (k) de générer un code d'erreur nécessitant un contrôle du pulsateur quand le résultat déterminé dans l'activité (j) est que la valeur de la section maintenue maximale (B) de la forme d'onde dans les données lues est inférieure à la valeur de déclenchement supérieure pour détecter la panne,
une activité (I) de déterminer si une valeur d'une section maintenue minimale (D) de la forme d'onde dans les données lues est supérieure à la valeur de déclenchement inférieure pour détecter la panne, et
une activité (m) de générer un code d'erreur nécessitant un contrôle du pulsateur quand le résultat déterminé dans l'activité (I) est que la valeur de la section maintenue minimale (D) de la forme d'onde dans les données lues est supérieure à la valeur de déclenchement inférieure pour détecter la panne.
